Europäisches Patentamt

European Patent Office

Office européen des brevets

(19)

(11) Publication number: **0 403 027**

**A1**

(12) **EUROPEAN PATENT APPLICATION**

(21) Application number: **90201546.0**

(22) Date of filing: **15.06.90**

(51) Int. Cl.⁵: **A23C 20/02, A23L 3/04**

(30) Priority: **16.06.89 JP 155263/89**

(43) Date of publication of application:
**19.12.90 Bulletin 90/51**

(84) Designated Contracting States:
**CH DE DK FR GB LI NL SE**

(71) Applicant: **Shikoku Kakoki Co., Ltd.**
**10-1, Aza-Nishinokawa Tarohachizu**
**Kitajima-cho**
**Itano-gun Tokushima(JP)**

(72) Inventor: **Hayashi, Kojiro, c/o Shikoku Kakoki**
**Co. Ltd.**
**10-1 Aza-Nishinokawa, Tarohachizu**
**Kitajima-cho, Itano-gun, Tokushima(JP)**

(74) Representative: **Noz, Franciscus Xaverius, Ir.**
**et al**
**Algemeen Octrooibureau P.O. Box 645**
**NL-5600 AP Eindhoven(NL)**

(54) **Process for producing bean curd as placed in containers.**

(57) A process for producing bean curd as placed in containers by dewatering and shaping coagulated soybean milk or shaping the milk without dewatering to obtain bean curd, placing the bean curd into containers without reducing the temperature of the bean curd from the coagulating temperature to the greatest possible extent, sealing up the containers, sterilizing the bean curd as placed in the containers by heating and thereafter cooling the bean curd placed in the containers to a storage temperature, whereby aseptic bean curd preservable for a long period of time can be prepared without impairing the taste thereof.

FIG.1

## BACKGROUND OF THE INVENTION

The present invention relates to a process for producing bean curd, especially bean curd as placed in containers.

Conventional processes for producing bean curd include a process which comprises the steps of dewatering and shaping coagulated soybean milk or shaping the milk only without dewatering to obtain bean curd, cooling the resulting bean curd approximately to room temperature, placing the cooled bean curd into containers, and closing each container with a sealed closure with the bean curd placed therein to obtain bean curd as placed in the containers.

With the above process, bateria adhering to bean curd during cooling or those adhering to the container contaminate the interior of the container, causing the bean curd to decay easily or rendering the bean curd not preservable for a long time. Accordingly, it appears desirable to heat the bean curd as placed in the container for sterilization, but the bean curd will then become impaired in taste since it requires a considerable period of time to heat the bean curd once cooled to the steriliza tion temperature.

## SUMMARY OF THE INVENTION

The main object of the present invention is to provide a process for producing bean curd as placed in containers, having a good taste and preservable for a long period of time.

The present invenion provides a process for producing bean curd as placed in containers which process comprises the steps of dewatering and shaping coagulated soybean milk by placing the milk into buckets having drain holes and pressing the milk, removing the dewatered and shaped soybean milk from the buckets to prepare bean curd, placing the resulting bean curd into containers, applying a lid to each of the containers with the bean curd placed therein and sealing up each container, sterilizing the sealed containers by heating, and cooling the sterilized sealed containers to a storage temperature to obtain the bean curd as placed in the containers.

Instead of the above step of preparing bean curd, a mixture of soybean milk and a coagulant therefor may be filled into coagulating buckets and coagulated, followed by the removal of the coagulated milk from the buckets to prepare bean curd.

According to the present invention, bean curd is placed into container, sealed up and thereafter sterilized. This renders the interior of the container free from bacteria or other contaminants to afford bean curd which is preservable for a long period of time. Further because the bean curd is placed into the container and sterilized by heating while being maintained at a temperature approximately the same as the coagulating temperature and is thereafter cooled, the bean curd can be sterilized by a shortened period of heating without impairing the taste of thereof.

## BRIEF DESCRIPTION OF THE DRAWINGS

FIG. 1 is a diagram schematically showing a production machine for use in practicing the present invention; and

FIG. 2 is a diagram schematically showing another production machine similarly for use in practicing the invention.

## DESCRIPTION OF THE PREFERRED EMBODIMENTS

Embodiments of the present invention will be described below with reference to the drawings.

There are two kinds of bean curds; so-called "momen tofu" (coarse-textured bean curds and "kinugoshi tofu" (fine-textured bean curd).

Two processes for producing these two kinds of bean curds, respectively, will be described.

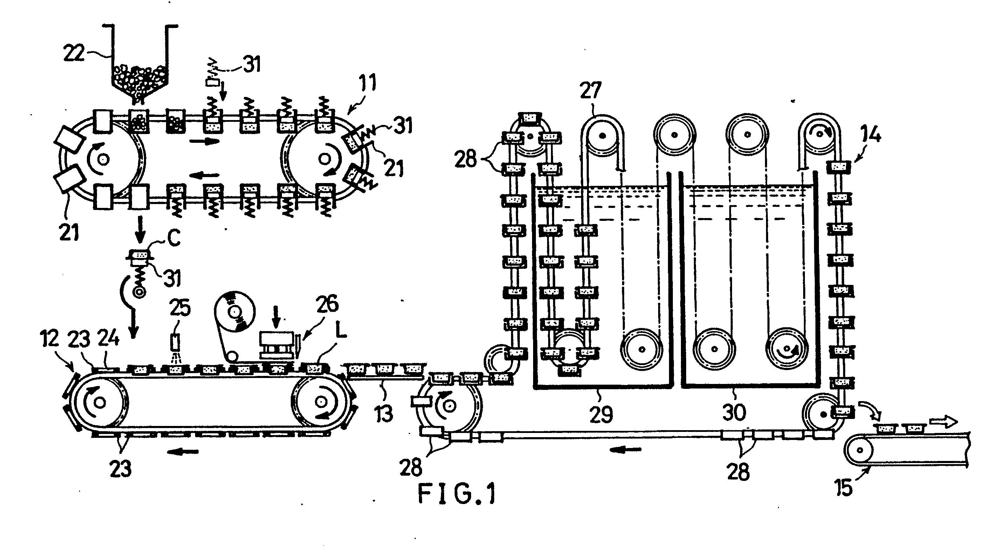

FIG. 1 shows a machine for use in producing "momen tofu" or coarse-textured bean curd.

The mcahine comprises a dewatering-shaping conveyor 11, a sealing conveyor 12 disposed therebelow, a heating-cooling conveyor 14 connected to the container 12 by a transfer plate 13, and a discharge conveyor 15 connected to the conveyor 14.

The dewatering-shaping conveyor 11 has a multiplicity of press buckets 21. Although not shown, each of the press buckets 21 is formed with a multiplicity of drain holes for passing therethrough the water contained in coagulated soybean milk but not passing coagulated soybean milk therethrough. A hopper 22 is disposed above the starting end of the upper path of travel of the press buckets 21 for containing crushed coagulated soybean milk. The sealing conveyor 12, which is a slat conveyor, has slats 23 each having a container holding aperture 24. An aseptic hot water nozzle 25 and a sealing device 26 are arranged along the upper path of travel of the slats. The heating-cooling conveyor 14, which is a chain conveyor, has a multiplicity of container holders 28 attached to the chains 27 thereof. The chains 27 have a zigzag path, along which the container holders 28 pass through a heating water tank 29 first and then through a cooling water tank 30.

Coagulated soybean milk obtained by the usual method is continuously charged into the hopper 22. The coagulated soybean milk charged in has been crushed to such sizes as to be readily dewatered, for examples, to sizes corresponding to a rectangular parallelepiped with 20 mm square cross section. The coagulated soybean milk in the hopper 22 has a temperature of at least 70°C, preferably 75°C. If the temperature is lower than 70°C, it is difficult to dewater and shape the coagulated soybean milk into blocks of bean curd.

The coagulated milk is delivered from the hopper 22 in portions, each corresponding to one block of bean curd, which are placed into the respective press buckets 21. A closure 31 is fitted in each press bucket 21 having the coagulated milk placed therein. The closure 31 is pressed on while traveling along with the press bucket 21, whereby the milk is dewatered and shaped into bean curd. The press bucket 21 is brought into the lower path of travel as turned upside down, and when the press bucket 21 almost reaches the terminal end of the lower path, the bean cured is withdrawn as placed on the closure 31 from the press bucket 21. A container C is fitted over the bean curd withdrawn, whereupon the closure 31 is turned upside down, whereby the container C is positioned upright normally with the bean curd placed therein and retained in the container holding aperture 24 of the slat 23. While the container C travels along with the slat 23, hot water having a temperature of about 70 to about 80°C is filled into the container, and a lid L is subsequently applied to the container. At this time, the bean curd is maintained at a temperature of about 75°C. When the bean curd as contained in the container reaches the terminal end of the path of travel of the slat, the bean curd is transferred from the slat 23 to the container holder 28 of the heating-cooling conveyor 14. While traveling with the container holder 28, the bean curd as placed in the container is brought into the heating water tank 29 and transported through the tank 29 while being immersed in heating water. When to be brought into the heating water tank 29, the bean curd has a temperature only 2 to 3°C lower than the above temperature 75°C. The heating water is maintained at a temperature of at least 90°C, preferably about 95°C, and the bean curd in the container is immersed in the hot water for at least 10 minutes, preferably for 15 minutes. When brought out of the heating water tank 29, the bean curd as placed in the container is transported into the cooling water tank 30 and transported through the tank 30 as immersed in cooling water. The cooling water is maintained at a temperature of up to 10°C, preferably about 5°C. The bean curd in the container is immersed in the cooling water for at least 40 minutes, preferably for 50 minutes. In this way, the bean curd as placed in each container is sterilized by heating, then cooled to a storage temperature, thereafter brought out of the cooling water tank 30 and delivered onto the discharge conveyor 15.

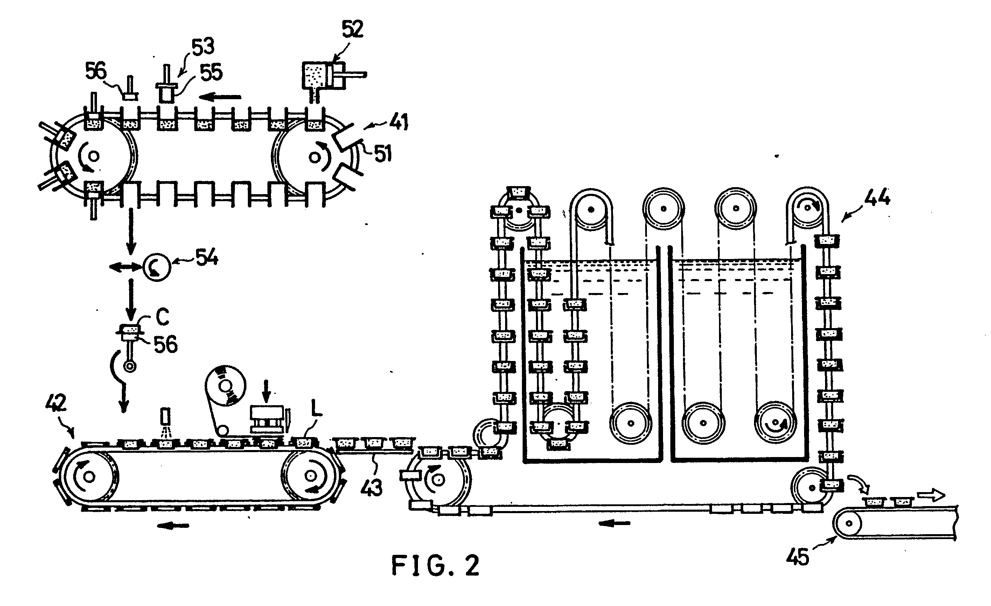

FIG. 2 shows a machine for producing "kinugoshi tofu" or fine-textured bean curd.

The machine comprises a coagulating conveyor 41 in place of the dewatering-shaping conveyor 11 of the coarse-textured bean curd producing machine, a sealing conveyor 42 disposed below the conveyor 41, a heating-cooling conveyor 44 connected to the conveyor 42 by a transfer plate 43, and a discharge conveyor 45 connected to the conveyor 44.

The coagulating conveyor 41 has a multiplicity of coagulating buckets 51. Each of the coagulating buckets 51 has a capacity to contain coagulant-containing soybean milk in an amount corresponding to several blocks of bean curd and in the form of a rectangle elongated in a direction perpendicular to the direction of travel of the buckets when seen from above. A specified amount filling machine 52 is disposed above the starting end of the upper path of travel of the buckets 51. A separator 53 is disposed close to the terminal end of the path. A cutter 54 is disposed below the starting end of lower path of travel of the buckets 51. The conveyors 42, 44, 45, etc. other than the coagulating conveyor 41 each have the same construction as the corresponding conveyor of the coarse-textured bean curd producing machine except that the conveyor is adapted to transport bean curd in a plurality of rows in corresponding relation to the capacity of the bucket 51.

Soybean milk and a coagulant therefor are separately fed to the filling machine 52. At this time, the soybean milk has a temperature of at least 70°C, and the coagulant has room temperature. The coagulant to be used is a slow-acting coagulant, such as calcium chloride, calcium sulfate, glucono delta lactone or the like.

The filling machine 52 mixes together the soybean milk and the coagulant in amounts corresponding to several blocks of bean curd, and the mixture is filled into each bucket 51, whereupon the mixture starts to coagulate. By the time the bucket 51 reaches the position of the separator 53, the coagulation of the mixture in the bucket 51 is completed to give fine-textured bean curd.

When the coagulant to be used is a fast-acting coagulant, such as bittern (magnesium chloride), magnesium sulfate or the like, soybean milk and the coagulant are separately fed at room temperature to the filling machine 52, mixed together and thereafter filled into the bucket 51. The mixture in the bucket 51 coagulates similarly into fine-textured bean curd when heated at 95 to 100°C for about 30 minutes. The mixture in the bucket 51 can be heated by passing the bucket 51 through an unillustrated steam chamber.

The separator 53 has a separating member 55 U-shaped in conformity with the cross sectional contour of the inner surface of the bucket 51 and movable upward and downward and horizontally longitudinally of the bucket. The bean curd is separated off the bucket 51 by moving the separating member 55 along the inner surface of the bucket 51. A receiving member 56 is then inserted into the bucket 51. When the bucket 51 having the receiving member 56 inserted therein travels into the lower path of its travel, the bucket 51 is turned upside down. A barlike mass of bean curd corresponding to several blocks thereof is withdrawn as placed on the receiving member 56 from the bucket 51. The barlike mass of bean curd withdrawn is cut into separate blocks by the cutter 54, and a container C is fitted over each of the bean curd blocks. Subsequently, the receiving member 56 is turned upside down, whereby the containers C are positioned upright normally with the bean curd placed therein and delivered onto the sealing conveyor 42. The bean curd is thereafter treated in exactly the same manner as in the case of coarse-textured bean curd.

**Claims**

1. A process for producing bean curd as placed in containers comprising the steps of:
preparing bean curd by placing coagulated soybean milk into buckets having drain holes, pressing the milk for dewatering and shaping and removing the resulting milk from the buckets,
placing the resulting bean curd into containers,
applying a lid to each of the containers with the bean curd placed therein and sealing up each container,
sterilizing the sealed containers by heating, and cooling the sterilized sealed containers to a storage temperature to obtain the bean curd as placed in the containers.

2. A process as defined in claim 1 wherein the coagulated soybean milk to be placed into the buckets is crushed to such sizes as to be easily dewatered.

3. A process as defined in claim 1 wherein the coagulated soybean milk to be placed into the buckets has a temperature of at least 70°C.

4. A process as defined in claim 1 wherein the bean curd to be placed into the containers has a temperature of at least 60°C.

5. A process as defined in claim 1 which further comprises the step of filling each container having the bean curd placed therein with hot water having approximately the same temperature as the bean curd before the lid is applied to the container.

6. A process as defined in claim 1 wherein the step of sterilizing the sealed containers by heating is practiced by immersing the sealed containers in a hot water bath maintained at a temperature of at least 90°C for at least 10 minutes.

7. A process as defined in claim 1 wherein the step of cooling the sterilized sealed containers to a storage temperature is practiced by immersing the sealed containers in a cooling water bath maintained at a temperature of up to 10°C for at least 40 minutes.

8. A process for producing bean curd as placed in containers comprising the steps of:
preparing bean curd by filling a mixture of soybean milk and a coagulant therefor into coagulating buckets to coagulate the soybean milk and removing the coagulated milk from the buckets,
placing the resulting bean curd into containers,
applying a lid to each of the containers with the bean curd placed therein and sealing up each container,
sterilizing the sealed containers by heating, and cooling the sterilized sealed containers to a storage temperature to obtain the bean curd as placed in the containers.

9. A process as defined in claim 8 wherein the soybean milk to be filled into the coagulating buckets has a temperature of at least 70°C, the coagulant being a slow-acting one, and the soybean milk is coagulated without heating.

10. A process as defined in claim 8 wherein the soybean milk to be filled into the coagulating buckets has room temperature, the coagulant being a fast-acting one, and the soybean milk is coagulated by heating.

11. A process as defined in claim 8 wherein the bean curd to be placed into the containers has a temperature of at least 60°C.

12. A process as defined in claim 8 which further comprises the step of filling each container having the bean curd placed therein with hot water having approximately the same temperature as the bean curd before the lid is applied to the container.

13. A process as defined in claim 8 wherein the step of sterilizing the sealed containers by heating is practiced by immersing the sealed containers in a hot water bath maintained at a temperature of at least 90°C for at least 10 minutes.

14. A process as defined in claim 8 wherein the step of cooling the sterilized sealed containers to a storage temperature is practiced by immersing the sealed containers in a cooling water bath maintained at a temperature of up to 10°C for at least 40 minutes.

FIG.1

FIG. 2

EP 0 403 027 A1

# EUROPEAN SEARCH REPORT

Application Number

EP 90 20 1546

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,A | EP-A-0 334 461 (SHIKOKU KAKOKI CO., LTD.) * abstract; figure 1; claims 1-8 * | 1,2 | A 23 C 20/02 A 23 L 3/04 |
| A | US-A-4 828 869 (S. DOI et al.) * figure 1; claims 1-4 * | 1 | |
| A | US-A-4 636 398 (M. MATSUURA) * claims 1-5 * | 1 | |
| A | PATENT ABSTRACTS OF JAPAN vol. 8, no. 106 (C-223)(1443), 18 May 1984; & JP-A-5921366 (INABA SHIYOKUHIN K.K.) 03.02.1984 | 1 | |
| A | PATENT ABSTRACTS OF JAPAN vol. 11, no. 8 (C-396)(2455), 9 January 1987; & JP-A-61187764 (SHIKOKU KAKI CO., LTD.) 21.08.1986 | | |
| Y | PATENT ABSTRACTS OF JAPAN vol. 9, no. 278 (C-312)(2001), 6 November 1985; & JP-A-60126048 (EBARA SHIYOKUHIN) 05.07.1985 | 1,8 | |
| A | idem | 4-6,11, 12,14 | |
| Y | PATENT ABSTRACTS OF JAPAN vol. 5, no. 89 (C-58)(761), 10 June 1981; & JP-A-56032970 (TAKAI SEISAKOSHU) 02.04.1981 | 1,8 | |
| A | idem | 2 | |

TECHNICAL FIELDS SEARCHED (Int. Cl.5)

A 23 C 20/00
A 23 L 3/00

-/-

The present search report has been drawn up for all claims

| Place of search | Date of completion of the search | Examiner |
|---|---|---|
| BERLIN | 12-09-1990 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)

European Patent
Office

Application Number

EP  90 20 1546

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | PATENT ABSTRACTS OF JAPAN vol. 10, no. 56 (C-331)(2113), 6 March 1986; & JP-A-60199362 (EBARA SHIYOKUHIN) 08.10.1985 --- | 1,4,5,8 ,11,12 | |
| A | PATENT ABSTRACTS OF JAPAN vol. 5, no. 35 (C-46)(707), 5 March 1981; & JP-A-55159767 (IKEDA SANGYO) 12.12.1980 ----- | 1,8 | |
| | | | TECHNICAL FIELDS SEARCHED (Int. Cl.5) |

The present search report has been drawn up for all claims

| Place of search | Date of completion of the search | Examiner |
|---|---|---|
| BERLIN | 12-09-1990 | SCHULTZE D |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)